# EUROPÄISCHE PATENTSCHRIFT

(11) **EP 0 633 170 B1**
(45) Veröffentlichungstag und Bekanntmachung des Hinweises auf die Patenterteilung: **08.04.1998**
(21) Anmeldenummer: 94110648.6
(22) Anmeldetag: 08.07.1994
(51) Int. Cl.: B60S 1/38

(54) **Wischblatt für Scheiben von Kraftfahrzeugen**
Wiper blade for windscreens of vehicles
Lame d'essuyage pour pare-brises de véhicules

(30) Priorität: 09.07.1993 DE 9310261 U
(43) Veröffentlichungstag der Anmeldung: 11.01.1995
(73) Patentinhaber: ROBERT BOSCH GMBH, 70442 Stuttgart (DE)
(72) Erfinder: Wagner, Walter, Dipl.-Ing. (FH), D-77830 Bühlertal (DE); Verelst, Hubert, Dipl.-Ing. (TH), B-3300 Tienen (BE); Nys, Dirk, B-3390 Tielt-Winge (BE)

(56) Entgegenhaltungen:
- DE-A- 3 740 639
- DE-B- 2 843 249
- DE-U- 8 518 515

## Beschreibung

### Stand der Technik

Die Erfindung geht aus von einem Wischblatt nach der Gattung des Hauptanspruchs. Es ist schon ein solches Wischblatt bekannt (DE-C-35 32 536), bei dem die in der Basiswand des Hauptbügels angeordneten Durchbrechungen höchstens so breit sind, wie dies der Abstand zwischen den beiden U-Schenkel zuläßt. Dadurch liegt die volle Breite des aus Festigkeitsgründen eine bestimmte Höhe aufweisenden, dem Spoiler gegenüberliegenden U-Schenkels im Luftstrom, was zu unerwünschten Verwirbelungen des Luftstroms und damit zu einer Verschlechterung der Wischqualität bei höheren Fahrgeschwindigkeiten führt.

### Vorteile der Erfindung

Das erfindungsgemäße Wischblatt mit den kennzeichnenden Merkmalen des Hauptanspruchs hat demgegenüber den Vorteil, daß der im Luftstrom liegende hintere U-Schenkel im Bereich der Durchbrechungen erheblich schmaler ausgeführt werden kann, so daß die Verwirbelungen deutlich reduziert werden. Gleichzeitig rücken die Durchbrechungen mehr in die Richtung der ankommenden Luftströmung, so daß diese leichter und schneller durch die Durchbrechung hindurch den Hauptbügel verlassen kann, so daß unter dem Hauptbügel der Unterdruck größer wird. Weiter kann durch diese Maßnahme die Fläche des Spoilers reduziert werden. Die erforderliche Festigkeit des Hauptbügels wird durch den anderen U-Schenkel und den an diesen angeordneten Spoiler gewährleistet.

Durch die in den Unteransprüchen aufgeführten Maßnahmen sind vorteilhafte Weiterbildungen und Verbesserungen des im Hauptanspruch angegebenen Wischblatts möglich.

### Zeichnung

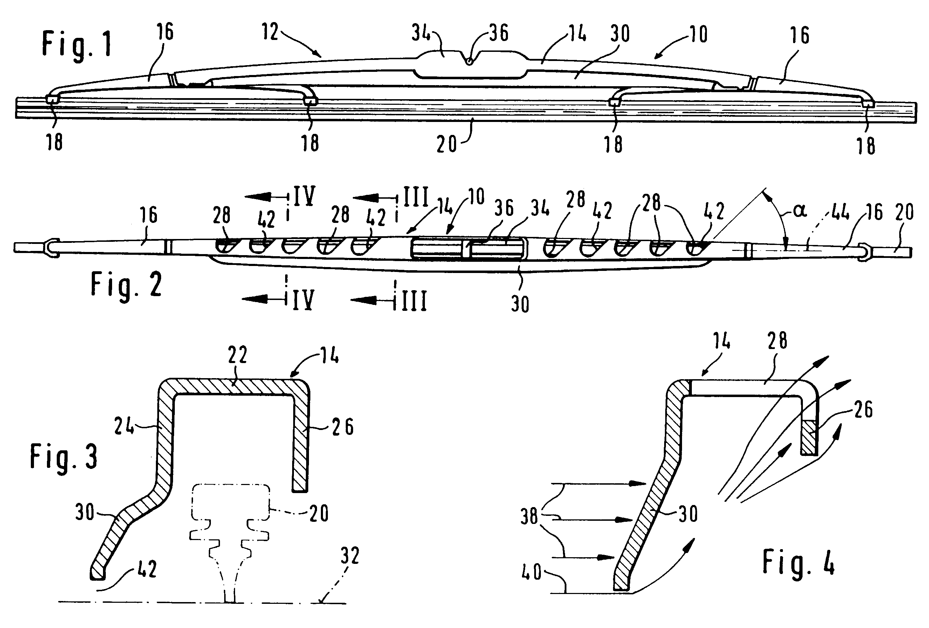

Ein Ausführungsbeispiel der Erfindung ist in der Zeichnung dargestellt und in der nachfolgenden Beschreibung näher erläutert. Es zeigen Figur 1 ein Scheibenwischblatt in Ansicht, Figur 2 das Scheibenwischblatt gemäß Figur 1 in Draufsicht, Figur 3 eine Schnittfläche eines Wischblatt-Hauptbügels in vergrößerter Darstellung, mit angedeuteter Wischleistenposition, die sich bei einem Schnitt entlang der Linie III-III in Figur 2 ergibt, wenn das Wischblatt auf einer stärker gekrümmten Scheibe aufliegt und Figur 4 eine Schnittfläche des Wischblatthauptbügels entlang der Linie IV-IV in Figur 2 vergrößert dargestellt.

### Beschreibung des Ausführungsbeispiels

Ein in Figur 1 in Ansicht dargestelltes Wischblatt 1 weist ein mehrgliedriges Traggestell 12 auf, das einen Hauptbügel 14 und an dessen Enden waagebalkenartig angelenkte Unter- oder Krallenbügel 16 hat. Die Krallenbügel 16 fassen mit an ihren Enden angeordneten Krallenpaaren 18 eine langgestreckte Wischleiste 20. Sie übergreifen dabei den Rücken der Wischleiste 20 und fassen in Längsnuten, welche einander gegenüberliegend im Rückenbereich der Wischleiste angeordnet sind. Der Hauptbügel 14 ist langgestreckt und weist einen U-förmigen Querschnitt auf, was aus den Figuren 3 und 4 deutlich wird. Er hat somit eine Basiswand 22, die zwei mit Abstand voneinander angeordnete U-Schenkel 24 und 26 miteinander verbindet. Wie die Figur 2 weiter zeigt, hat der Hauptbügel 14 Durchbrechungen 28, die sich überwiegend in der Basiswand 22 befinden, sich jedoch noch bis in den Bereich des U-Schenkels 24 erstrecken. Dies ist besonders gut aus der Figur 4 ersichtlich. Der diesem U-Schenkel 26 gegenüberliegende andere U-Schenkel 24 ist mit einem Spoiler 30 versehen, der sich bis nahe an die zu wischende Scheibe 32 (Figur 3) erstreckt. In Figur 3 ist darüber hinaus mit strichpunktierten Linien die Position der Wischleiste 20 dargestellt, in der sich diese befindet, wenn das Wischblatt 10 über einen stärker gekrümmten Bereich der Windschutzscheibe wischt. Weiter weist der Hauptbügel 14 in seinem Mittelbereich einen sogenannten Einhängekasten 34 auf, in dem eine Einhängeachse 36 zum Verbinden des Wischblatts mit einem nicht dargestellten, angetriebenen Wischerarm angeordnet ist.

Während des Betriebs des Wischblatts wird dieses auf seiner mit dem Spoiler 30 versehenen Seite besonders stark vom Fahrtwind angeströmt, der in Figur 2 durch die Pfeile 38 angedeutet ist. Ein Teil des Fahrtwindes (Pfeil 40) gelangt jedoch durch einen Spalt 42 (Figur 3), der sich zwischen dem freien Spoilerende und der Oberfläche der zu wischenden Scheibe 32 ergibt, hinter den Spoiler 30. Dieser Teilstrom 40 strömt insbesondere den Hauptbügel 14 von unten an und versucht das Wischblatt 14 von der Scheibe abzuheben. Es gilt also diesem Teilstrom 40 möglichst wenig Angriffsfläche zu bieten und rasch aus dem Wischblattbereich abzuführen. Dies wird besonders vorteilhaft dadurch erreicht, daß die Durchbrechungen 28 sich bis in den vom Spoiler 30 abgewandten U-Schenkel 26 des Hauptbügels 14 erstrecken. Wie aus Figur 2 ersichtlich ist, weisen die Durchbrechungen 28 eine Seitenkante 42 auf, die mit einer Längsachse 44 des Hauptbügels 14 einen spitzen Winkel α einschließen. Dabei ist die Neigungsrichtung der Seitenkante 42 so getroffen, daß sie etwa waagrecht verläuft, wenn das Wischblatt 10 die Hälfte seines im wesentlichen zwischen 90° und 100° betragenden Pendelwinkels auf der Scheibe 32 zurückgelegt hat, weil in dieser Stellung das Wischblatt seine direkteste Anströmung durch den auf der Scheibe zur Seite abgelenkten Fahrtwindstrom erfährt. Dieser wird durch die so angeordneten Durchbrechungen 28 fast störungsfrei durch den Hauptbügel 14 hindurchgeführt.

## Patentansprüche

1. Wischblatt für Scheiben von Kraftfahrzeugen, mit einem Traggestell (12), das einen langgestreckten, im Querschnitt U-förmigen Hauptbügel (14) aufweist, an dessen Enden weitere Bügel (16) angelenkt sind, von denen wenigstens zwei mit an ihren Enden angeordneten Krallenpaaren (18) die Längsseiten einer auf der zu wischenden Scheibe aufliegenden, langgestreckten, gummielastischen Wischleiste (20) fassen, wobei an der vom Fahrtwind zumindest überwiegend angeströmten Seite des Hauptbügels (14) ein sich zur Scheibe erstreckender Spoiler (30) angeordnet ist und in der die beiden U-Schenkel (24,26) des Hauptbrügels verbindenden Basiswand (22) Durchbrechungen (28) angeordnet sind, dadurch gekennzeichnet, daß sich die Durchbrechungen (28) bis in den von dem Spoiler (30) abgewandten U-Schenkel (26) des Hauptbügels (14) erstrecken.

2. Wischblatt nach Anspruch 1, dadurch gekennzeichnet, daß die Durchbrechungen (28) wenigstens eine Seitenkante (42) aufweisen, die mit der Längsachse (44) des Hauptbügels (14) einen spitzen Winkel α einschließen.

3. Wischblatt nach Anspruch 2, dadurch gekennzeichnet, daß die Seitenkante (42) etwa waagrecht verläuft, wenn das Wischblatt (10) die Hälfte seines im wesentlichen zwischen 90° und 100° betragenden Pendelwinkels auf der Scheibe (32) zurückgelegt hat.

## Claims

1. Wiper blade for windscreens of motor vehicles, having a carrying framework (12) which has an elongate, cross-sectionally U-shaped main bracket (14) at the ends of which there are articulated further brackets (16), and at least two of these further brackets, by means of claw pairs (18) arranged at their ends, grip the longitudinal sides of an elongate, elastomeric wiper strip (20) which rests on the windscreen which is to be wiped, a spoiler (30) which extends as far as the windscreen being arranged on that side of the main bracket (14) which is at least predominantly exposed to the flow of the relative wind, and through-passages (28) being arranged in the base wall (22), which connects the two U-legs (24, 26) of the main bracket, characterized in that the through-passages (28) extend into the U-leg (26) of the main bracket (14), said U-leg being directed away from the spoiler (30).

2. Wiper blade according to Claim 1, characterized in that the through-passages (28) have at least one side edge (42), and these side edges enclose an acute angle α with the longitudinal axis (44) of the main bracket (14).

3. Wiper blade according to Claim 2, characterized in that, when the wiper blade (10) has covered half of its swing angle on the windscreen (32), said angle being essentially between 90° and 100°, the side edge (42) runs approximately horizontally.

## Revendications

1. Balai d'essuie-glace pour pare-brise de véhicule automobile, comprenant une ossature (12) formée d'un étrier principal (14) allongé à section en forme de U, dont les extrémités portent des palonniers articulés(16), dont au moins deux sont en prise avec des paires de griffes (18) prévues à leurs extrémités sur les grands côtés d'une lame d'essuyage (20) ayant l'élasticité du caoutchouc, allongée, appliquée sur le pare-brise à essuyer, et le côté de l'étrier principal (14) attaqué au moins principalement par le vent de roulage, comporte un déflecteur (30) s'étendant en direction du pare-brise, tandis que la paroi de base (22) qui relie les deux branches en U (24, 26) de l'étrier principal comporte des découpes (28),
caractérisé en ce que
les découpes (28) s'étendent jusque dans la branche U (26) de l'étrier principal (14), opposée au déflecteur (30).

2. Balai d'essuie-glace selon la revendication 1,
caractérisé en ce que
les découpes (28) ont au moins une arête latérale (42) faisant un angle aigu α avec l'axe longitudinal (44) de l'étrier principal (14).

3. Balai d'essuie-glace selon la revendication 2,
caractérisé en ce que
l'arête latérale (42) est sensiblement horizontale lorsque le balai d'essuie-glace (10) se trouve sensiblement à la moitié de son angle pendulaire sur le pare-brise (32), compris essentiellement entre 90° et 100°.
